# EUROPEAN PATENT SPECIFICATION

(11) **EP 4 083 259 B1**
(45) Date of publication and mention of the grant of the patent: **21.08.2024**
(21) Application number: 21193172.0
(22) Date of filing: 26.08.2021
(51) Int. Cl.: C25B 1/04, C25B 11/053, C25B 11/075, C25B 11/081, C25B 11/089, C25B 11/032, C25B 9/23

(54) **MEMBRANE ELECTRODE ASSEMBLY AND METHOD FOR HYDROGEN EVOLUTION BY ELECTROLYSIS**
MEMBRANELEKTRODENANORDNUNG UND VERFAHREN ZUR WASSERSTOFFENTWICKLUNG DURCH ELEKTROLYSE
ENSEMBLE ÉLECTRODE À MEMBRANE ET PROCÉDÉ D'ÉVOLUTION D'HYDROGÈNE PAR ÉLECTROLYSE

(30) Priority: 28.04.2021 TW 110115289
(43) Date of publication of application: 02.11.2022
(73) Proprietor: Industrial Technology Research Institute, 310401 Hsinchu (TW)
(72) Inventor: LIN, Kuo-Hsin, Hsinchu City (TW); HUANG, Hsiao-Chun, Taoyuan City (TW); TSAI, Li-Duan, Hsinchu City (TW); CHEN, Hao-Ming, New Taipei City (TW)
(74) Representative: Michalski Hüttermann & Partner Patentanwälte mbB

(56) References cited:
- WO-A1-2018/037774
- US-A1- 2020 173 040
- US-B2- 10 461 350

## Description

### TECHNICAL FIELD

The technical field relates to an electrolysis device comprising membrane electrode assembly, and in particular it relates to method for hydrogen evolution by electrolysis with the membrane electrode assembly.

### BACKGROUND

Seeking alternative energy is imperative now due to energy shortages, and hydrogen energy is the best choice. Hydrogen gas serving as fuel meets the requirements of environmental protection, and electrolysis of water is the easiest way to generate hydrogen and oxygen. In the future development of green hydrogen source technologies for carbon neutrality, the hydrogen evolution by electrolysis of alkaline water has the advantages of low construction cost and long component durability, thereby being a promising technology and attracting international attention.

WO 2018/037774 A1 describes that a cathode of an electrolysis cell for producing an organic hydride is provided with a cathode catalyst layer comprising a first catalyst for hydrogenating a substance to be hydrogenated with protons and generating an organic hydride; a cathode chamber for housing the cathode catalyst layer; and a second catalyst that is disposed in an area in the cathode chamber excluding the cathode catalyst layer and that promotes a chemical reaction of hydrogen gas, which is a product of a side reaction in the cathode, with unreacted substance to be hydrogenated.

US 2020/173040 A1 describes a membrane electrode assembly which includes an anode having a first catalyst layer on a first gas-liquid diffusion layer, a cathode having a second catalyst layer on a second gas-liquid diffusion layer, and an anionic exchange membrane between the first catalyst layer of the anode and the second catalyst layer of the cathode.

The use of clean renewable energy is an international future development trend. The current focus of global development is on improving the efficiency of renewable energy, especially surplus power. Hydrogen evolution by electrolysis of water is beneficial to regulating the excess surplus electricity of renewable electricity. Therefore, improving the cost and efficiency of hydrogen evolution by electrolysis of water is an important basis of the industrialization of future technologies. Efficiently integrating various components to improve electrolysis efficiency and reduce costs is the critical core. Conventional electrolysis needs a flow channel layer to import alkaline aqueous solution and export the hydrogen and oxygen generated by electrolysis. However, the flow channel layer is manufactured by mechanical processing, which is expensive and increases the cost of electrolysis. Accordingly, a novel membrane electrode assembly is called for to omit the flow channel layer.

### SUMMARY

The invention is defined by the features of the independent claims.

One embodiment of the disclosure provides an electrolysis device according to claim 1.

Claim 11 provides a method for hydrogen evolution by electrolysis.

A detailed description is given in the following embodiments with reference to the accompanying drawings.

### BRIEF DESCRIPTION OF THE DRAWINGS

The disclosure can be more fully understood by reading the subsequent detailed description and examples with references made to the accompanying drawings, wherein:
Fig. 1 shows an electrolysis device for hydrogen evolution.
Fig. 2 shows an electrolysis device for hydrogen evolution.
Fig. 3 shows OER curves of Fe-nickel foams formed from iron precursor solutions of different concentrations in one embodiment.
Fig. 4 shows OER curves of Co-nickel foams formed from cobalt precursor solutions of different concentrations in one embodiment.
Fig. 5 shows HER curves of Co-nickel foams formed from cobalt precursor solutions of different concentrations in one embodiment.
Fig. 6 shows a current versus voltage curve of membrane electrode assemblies in one embodiment.
Fig. 7 shows a current versus voltage curve of membrane electrode assemblies in one embodiment.
Fig. 8 shows a current versus voltage curve of membrane electrode assemblies in one embodiment.
Fig. 9 shows current versus voltage curves of membrane electrode assemblies after being operated for 60 hours in one embodiment.
Fig. 10 shows a current versus voltage curve of membrane electrode assemblies in one embodiment.
Fig. 11 shows a comparison between current versus voltage curves of the different membrane electrode assemblies.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

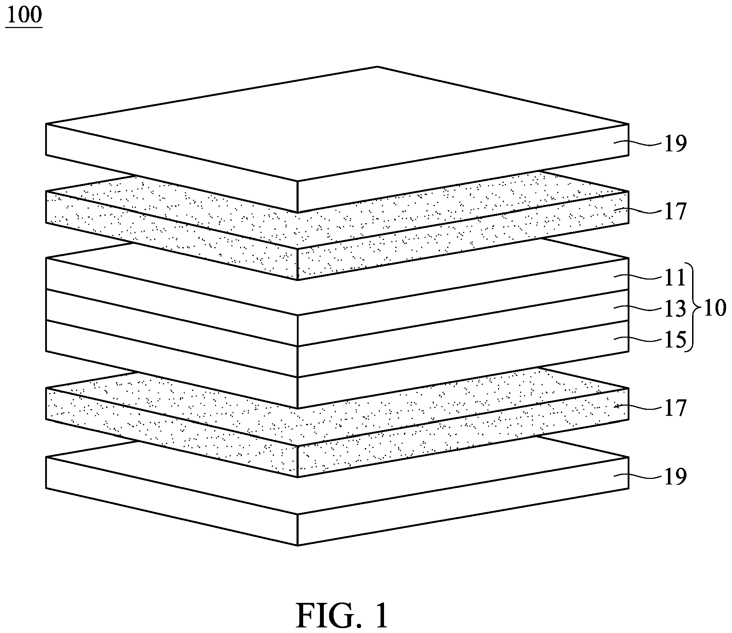

One embodiment of the disclosure provides an electrolysis device 100 for hydrogen evolution, as shown in Fig. 1 (not according to the invention). An anion exchange membrane 13 is disposed between an anode 11 and a cathode 15 to form a membrane electrode assembly (MEA) 10, and MEA 10 is disposed between two current collectors 19. For importing reactants (such as an alkaline aqueous solution) to MEA 10 and exporting products (such as hydrogen and oxygen) from MEA 10, one flow channel layer 17 should be disposed between the current collector 19 and the anode 11, and another one flow channel layer 17 should be disposed between the current collector 19 and the cathode 15. In general, the manufacture cost of the flow channel layer 17 is high, thereby increasing the cost of electrolysis device 100 for hydrogen evolution.

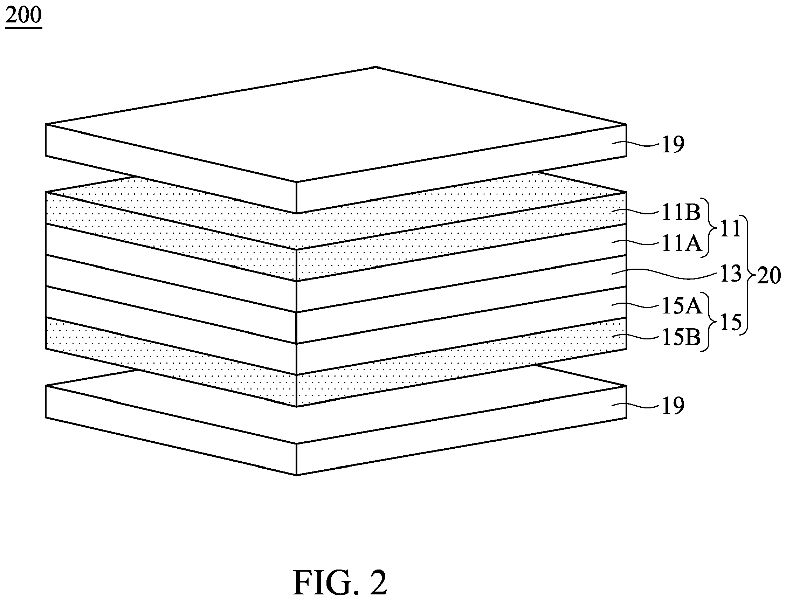

For addressing the flow channel layer issue, one embodiment of the disclosure provides an electrolysis device 200 for hydrogen evolution, as shown in Fig. 2. The electrolysis device 200 for hydrogen evolution includes MEA 20 disposed between two current collectors 19. MEA 20 includes an anode 11, a cathode 15, and an anionic exchange membrane 13 disposed between the anode 11 and the cathode 15. The anode 11 includes a metal mesh 11A wrapped by a catalyst layer C1 (not shown) and a metal mesh 11B wrapped by a catalyst layer C2 (not shown). The metal mesh 11A is disposed between the anion exchange membrane 13 and the metal mesh 11B. For example, the metal mesh 11A can be stainless steel mesh, Ti mesh, Ni mesh, Ni alloy mesh, niobium alloy mesh, copper mesh, or aluminum mesh. The catalyst layer C1 has a chemical structure of M'ₐM"_{b}N₂, M'_{c}M"_{d}Cₑ, or MₓRu_{y}N₂, wherein M' is Ni, Co, Fe, Mn, Cr, V, Ti, Cu, or Zn, M" is Nb, Ta, or a combination thereof, Mis Ni, Co, Fe, Mn, Cr, V, Ti, Cu, or Zn, 0.7≤a≤1.7, 0.3≤b≤1.3, a+b=2, 0.24≤c≤1.7, 0.3≤d≤1.76, 0.38≤e≤3.61, 0<x<1.3, 0.7<y<2, and x+y=2, wherein M'ₐM"_{b}N₂ is a cubic crystal system, M'_{c}M"_{d}Cₑ is a cubic crystal system or amorphous, and MₓRu_{y}N₂ is a cubic crystal system or amorphous. The metal mesh 11A wrapped by the catalyst layer C1 can be referred to Taiwan Patent No. I677596 that was previously applied by the applicant. Note that the catalyst C1 is not limited to the above catalyst composition, and can be any suitable commercially available catalyst for the anode.

On the other hand, the metal mesh 11B can be stainless steel mesh, Ti mesh, Ni mesh, Ni alloy mesh, niobium alloy mesh, copper mesh, or aluminum mesh. The catalyst layer C2 is iron, cobalt, manganese, zinc, niobium, molybdenum, ruthenium, platinum, gold, or aluminum. In one embodiment, the catalyst C2 wrapping the meal mesh 11B is iron, cobalt, zinc, niobium, molybdenum, ruthenium, platinum, or gold. Because the metal mesh 11B wrapped by the catalyst layer C2 is formed by chemical reduction, such that the catalyst layer C2 is crystalline. As known from experiments, the crystalline catalyst layer C2 has a better effect of hydrogen evolution by electrolysis than that of the amorphous catalyst C2. In addition, the metal mesh 11B is thicker than the metal mesh 11A so as to replace the function of the flow channel layer. In one embodiment, the metal mesh 11A is a stainless steel mesh with a smooth surface, and the metal mesh 11B is a nickel mesh with a rough surface (e.g. nickel foam). The metal mesh 11A may protect the anion exchange membrane 13 from being pierced by the metal mesh 11B (the pierced anion exchange membrane 13 may result in short failure of the device). The metal mesh 11B may replace the expensive flow channel layer, and provide a better effect of hydrogen evolution by electrolysis than that of the flow channel layer. On the other hand, the catalyst layer C1 is thicker than the catalyst layer C2. The catalyst layer C1 may have a thickness of 0.25 micrometers to 1 micrometers, and the catalyst layer C2 may have a thickness of 0.01 micrometers to 0.25 micrometers. If the catalyst layer C1 has a thickness of less than or equal to that of the catalyst layer C2, the effect of hydrogen evolution by electrolysis will be poor.

As shown in Fig. 2, the cathode 15 includes a metal mesh 15A wrapped by a catalyst layer C3 (not shown) and a metal mesh 15B wrapped by a catalyst layer C4 (not shown). The metal mesh 15A is disposed between the anion exchange membrane 13 and the metal mesh 15B. For example, the metal mesh 15A can be stainless steel mesh, Ti mesh, Ni mesh, Ni alloy mesh, niobium alloy mesh, copper mesh, or aluminum mesh. The catalyst layer C3 has a chemical structure of MₓRu_{y}N₂ or MₓRu_{y}, M is Ni, Co, Fe, Mn, Cr, V, Ti, Cu, or Zn, 0<x<1.3, 0.7<y<2, x+y=2, MₓRu_{y}N₂ is a cubic crystal system or amorphous, and MₓRu_{y} is a cubic crystal system. The metal mesh 15A wrapped by the catalyst layer C3 can be referred to Taiwan Patent No. I677596 that was previously applied by the applicant. Note that the catalyst C3 is not limited to the above catalyst composition, and can be any suitable commercially available catalyst for the cathode.

On the other hand, the metal mesh 15B can be stainless steel mesh, Ti mesh, Ni mesh, Ni alloy mesh, niobium alloy mesh, copper mesh, or aluminum mesh. The catalyst layer C4 is iron, cobalt, manganese, zinc, niobium, molybdenum, ruthenium, platinum, gold, or aluminum. In one embodiment, the catalyst C4 wrapping the metal mesh 15B is iron, cobalt, manganese, zinc, niobium, molybdenum, gold, or aluminum. Because the metal mesh 15B wrapped by the catalyst layer C4 is formed by chemical reduction, such that the catalyst layer C4 is crystalline. As known from experiments, the crystalline catalyst layer C4 has a better effect of hydrogen evolution by electrolysis than that of the amorphous catalyst C4. In addition, the metal mesh 15B is thicker than the metal mesh 15A so as to replace the function of the flow channel layer. In one embodiment, the metal mesh 15A is a stainless steel mesh with a smooth surface, and the metal mesh 15B is a nickel mesh with a rough surface (e.g. nickel foam). The metal mesh 15A may protect the anion exchange membrane 13 from being pierced by the metal mesh 15B (the pierced anion exchange membrane 13 may result in short failure of the device). The metal mesh 15B may replace the expensive flow channel layer, and provide a better effect of hydrogen evolution by electrolysis than that of the flow channel layer. On the other hand, the catalyst layer C3 is thicker than the catalyst layer C4. The catalyst layer C3 may have a thickness of 10 micrometers to 100 micrometers, and the catalyst layer C4 may have a thickness of 0.01 micrometers to 0.25 micrometers. If the catalyst layer C3 has a thickness of less than or equal to that of the catalyst layer C4, the effect of hydrogen evolution by electrolysis will be poor.

In one embodiment, the anion exchange film 13 can be a halogen ion-containing imidazole polymer or other suitable materials. For example, the anion exchange film 13 can be FAS (commercially available from Fumatech) or X37-50 (commercially available from Dioxide materials). Because MEA 20 is used to generate hydrogen by electrolyzing alkaline aqueous solution, the anion exchange film 13 rather than other ionic exchange film is adopted. In some embodiments, the current collectors can be stainless steel plate, titanium plate, or another suitable plate.

Because the metal mesh 11B of the anode 11 and the metal mesh 15B of the cathode 15 may function as the flow channel layer, there is no additional flow channel layer is required between MEA 20 and the current collectors 19. Note that both the anode 11 and the cathode 15 in Fig. 2 adopt the design of the dual-layered metal meshes, but the disclosure is not limited thereto. For example, the anode can be another commercially available anode (non-metal mesh) to collocate with the flow channel layer, and only the cathode utilizes the design of the dual-layered metal meshes to omit the flow channel layer. On the other hand, the cathode can be another commercially available cathode (non-metal mesh) to collocate with the flow channel layer, and only the anode utilizes the design of the dual-layered metal meshes to omit the flow channel layer. In other words, only one side of MEA may utilize the dual-layered metal meshes to omit the flow channel layer, and the other side of MEA may utilize the conventional flow channel layer.

In some embodiments, the catalyst layer C1 has a thickness of 0.25 micrometers to 1 micrometer, and the catalyst layer C3 has a thickness of 10 micrometers to 100 micrometers. If the catalyst layer C1 or the catalyst layer C3 is too thin, the effect of hydrogen evolution by electrolysis will be poor. If the catalyst layer C1 or the catalyst layer C3 is too thick, the effect of hydrogen evolution by electrolysis will be poor. In some embodiments, the catalyst layer C2 (or the catalyst layer C4) has a thickness of 0.01 micrometers to 0.25 micrometers. If the catalyst layer C2 or the catalyst layer C4 is too thin, the effect will be similar to that without the catalyst layer. If the catalyst layer C2 or the catalyst layer C4 is too thick, the effect of hydrogen evolution by electrolysis of MEA will be lowered.

In some embodiments, the metal mesh 11B or the metal mesh 15B has a pore size of 60 micrometers to 120 micrometers. If the pore size of the metal mesh 11B or the metal mesh 15B is too small, the reactants such as the alkaline aqueous solution cannot be efficiently imported to MEA 20 or the gaseous products (such as hydrogen and oxygen) cannot be efficiently exported from MEA 20. If the pore size of the metal mesh 11B or the metal mesh 15B is too large, the efficiency of hydrogen evolution by electrolysis cannot be kept for a long period (e.g. the decay extent after being a long-term operation would be high).

In some embodiments, the metal mesh 11B and the catalyst layer C2 have a weight ratio of 90:10 to 99.9:0.1, or the metal mesh 15B and the catalyst layer C4 have a weight ratio of 90:10 to 99.9:0.1. If the above weight ratio is too low (e.g. the catalyst layer amount is too high), the efficiency of hydrogen evolution by electrolysis will be poor. If the above weight ratio is too high (e.g. the catalyst layer amount is too low), the effect will be similar to that without the catalyst layer.

In some embodiments, the metal mesh 11B wrapped by the catalyst layer C2 is the same as the metal mesh 15B wrapped by the catalyst layer C4. Alternatively, the metal mesh 11B wrapped by the catalyst layer C2 is different from the metal mesh 15B wrapped by the catalyst layer C4, such as different catalyst types, different pore sizes of the metal meshes, different thickness of the metal meshes, or a combination thereof. For example, the catalyst layer C2 wrapping the metal mesh 11B may adopt iron, and the catalyst layer C4 wrapping the metal mesh 15B may adopt cobalt or gold.

One embodiment of the disclosure provides a method for hydrogen evolution by electrolysis, including: dipping MEA 20 in an alkaline aqueous solution. MEA 20 is similar to those described above, and the detail is not repeated here. Subsequently, a potential is applied to the anode 11 and the cathode 15 to electrolyze the alkaline aqueous solution for generating hydrogen using the cathode 15 and generating oxygen using the anode 11. In one embodiment, the alkaline aqueous solution has a pH value that is greater than or equal to 13. If the pH value of the alkaline aqueous solution is too low, its conductivity will be poor. In one embodiment, the alkaline aqueous solution has a pH value of 14.

Below, exemplary embodiments will be described in detail with reference to accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### EXAMPLES

### Example 1 (Nickel foams wrapped by different metals)

Commercially available nickel foam (GF28024657 commercially available from Merck) was pre-treated by the following steps: (1) dipped in acetone to be ultrasonic vibrated for 15 minutes; (2) washed with de-ionized water for 10 minutes; (3) dipped in 10 wt% of HCl and ultrasonic vibrated and washed for 30 minutes and then washed with water; and (4) dried in a vacuum oven at 50°C. After the pre-treatment, 250 mM of metal precursor solutions of Fe, Co, Mn, Zn, Nb, Mo, Cu, Ru, Pt, Au, Al, and Cr were formulated, respectively. The pre-treated nickel foam was dipped in the metal precursor solution and stirred for 3 hours, and the nickel foam surface was then washed with de-ionized water until the seepage liquid being transparent. The extra water was removed from the nickel foam by wipe paper, and the nickel foam was dried in a hot air circulation oven at 90°C, thereby obtaining a metal-nickel foam sample. As shown in the diffraction pattern of the transmission electron microscope (TEM), the metal of the samples had a crystalline phase. Note that the method of wrapping the nickel foam by the metal belongs to chemical reduction, thereby forming the metal of crystalline phase. If another method such as electroplating was adopted, the metal formed on the nickel foam would not be the crystalline phase. The half-cell electrochemical performance was measured by the following steps. In 0.1 M KOH solution, Ag/AgCl served as a reference electrode to measure EIS and LSV of OER (oxygen evolution reaction) and HER (hydrogen evolution reaction). In EIS measurement, the scan range of OER and HER was 0.1 Hz to 10000 Hz. In LSV measurement of OER, the scan voltage ranged from 1.0 V to 2.0 V, the scan rate was 10 mV/s, and there were three scans. In LSV measurement of HER, the scan voltage ranged from 0 to -0.4 V, the scan rate was 10 mV/s, and there were three scans.

**Table 1**

| | HER activity (mV at 10 mA/cm²) | OER activity (mV of 100 mA/cm²) |
|---|---|---|
| Nickel foam | 188 | 349 |
| Fe-nickel foam | 160 | 272 |
| Co-nickel foam | 147 | 337 |
| Mn-nickel foam | 162 | 360 |
| Zn-nickel foam | 158 | 305 |
| Nb-nickel foam | 164 | 320 |
| Mo-nickel foam | 168 | 342 |
| Cu-nickel foam | Not detectable | 353 |
| Ru-nickel foam | Not detectable | 324 |
| Pt-nickel foam | Not detectable | 338 |
| Au-nickel foam | 132 | 330 |
| Al-nickel foam | 184 | 351 |
| Cr-nickel foam | 209 | 368 |

For the non-noble metals, the Co-nickel foam had the best HER performance, which had an overpotential of 147 mV at the current density of 10 mA/cm², as shown in Table 1. For the noble metals, the Au-nickel foam had the best HER performance, which had an overpotential of 132 mV at the current density of 10 mA/cm². In the OER reactions, the Fe-nickel foam had the lowest overpotential of 272 mV at the current density of 100 mA/cm².

### Example 2 (Nickel foams wrapped by different amounts of different metals)

The concentrations of the metal precursor solutions of Fe, Co, Mn, Zn, Nb, Mo, Cu, Ru, Pt, Au, Al, and Cr were adjusted, respectively. The pre-treated nickel foam was dipped in the metal precursor solution and stirred for 3 hours, and the nickel foam surface was then washed with de-ionized water until the seepage liquid being transparent. The extra water was removed from the nickel foam by wipe paper, and the nickel foam was dried in a hot air circulation oven at 90°C, thereby obtaining a metal-nickel foam sample. The wrapping amounts on the nickel foams, HER activities, and OER activities of the different metals are shown in Tables 2 and 3, and HER activities and OER activities were measured by the method described above.

**Table 2**

| | Metal for HER/ (Nickel foam + Metal) (wt%) | | | | HER activity (mV at 10 mA/cm²) |
|---|---|---|---|---|---|
| | 1st | 2nd | 3rd | average | |
| Fe | 2.34 | 1.53 | 2.14 | 2.00 | 160 |
| Co | 5.26 | 6.07 | 4.76 | 5.36 | 146 |
| Mn | 1.06 | 2.27 | 0.00 | 1.11 | 162 |
| Cu | 77.86 | 84.56 | 79.45 | 80.62 | Not detectable |
| Zn | 5.88 | 9.96 | 2.54 | 6.13 | 158 |
| Nb | 0.12 | 0.32 | 0.05 | 0.17 | 164 |
| Mo | 1.99 | 1.85 | 2.32 | 2.05 | 168 |
| Ru | 77.79 | 60.38 | 72.92 | 70.36 | Not detectable |
| Pt | 59.33 | 70.23 | 89.02 | 72.86 | Not detectable |
| Au | 25.36 | 33.93 | 33.93 | 31.07 | 132 |

**Table3**

| | Metal for OER / (Nickel foam + Metal) (at%) | | | | OER activity (mV at 100 mA/cm²) |
|---|---|---|---|---|---|
| | 1st | 2nd | 3rd | average | |
| Fe | 2.45 | 1.61 | 2.25 | 2.10 | 272 |
| Co | 5.23 | 6.04 | 4.74 | 5.34 | 337 |
| Mn | 1.12 | 2.40 | 0.00 | 1.17 | 360 |
| Cu | 76.46 | 83.50 | 78.12 | 79.36 | 353 |
| Zn | 5.30 | 9.06 | 2.29 | 5.55 | 305 |
| Nb | 0.075 | 0.211 | 0.038 | 0.11 | 320 |
| Mo | 1.24 | 1.15 | 1.46 | 1.28 | 342 |
| Ru | 67.05 | 46.96 | 61.00 | 58.34 | 324 |
| Pt | 30.50 | 41.52 | 70.94 | 47.66 | 338 |
| Au | 9.19 | 13.27 | 13.27 | 11.91 | 330 |

The amounts of the metals wrapping the nickel foams were low (e.g. less than or equal to 10 wt% or at%) enough to achieve sufficient HER activity or OER activity, as shown in Tables 2 and 3.

### Example 3

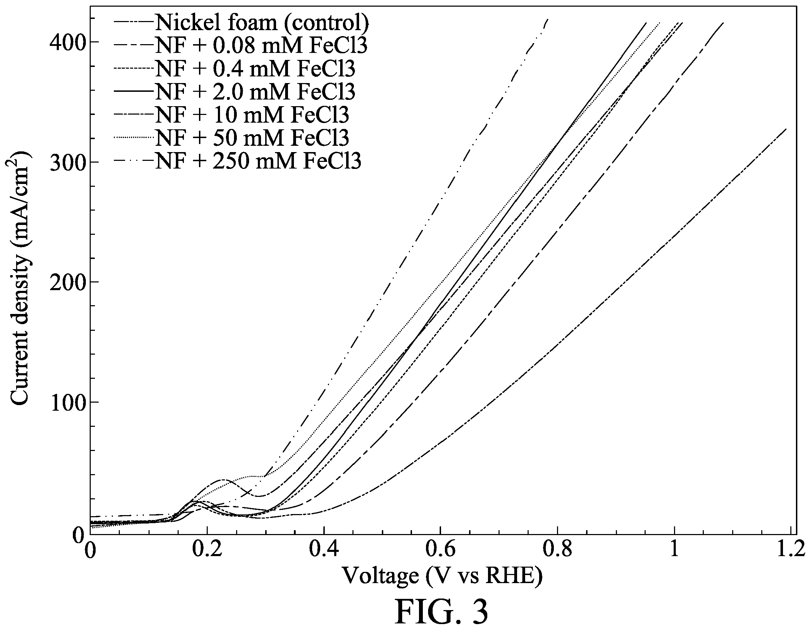

The pre-treated nickel foams were dipped in iron precursor solutions of different concentrations, respectively, and stirred for 3 hours. The nickel foam surface was then washed with de-ionized water until the seepage liquid being transparent. The extra water was removed from the nickel foams by wipe paper, and the nickel foams were dried in a hot air circulation oven at 90°C, thereby obtaining iron-nickel foam samples. The iron-nickel foam samples formed from the iron precursor solutions of different concentrations were measured by energy dispersive X-ray to perform an elemental analysis. HER activities and OER activities of the different iron-nickel foam samples were measured as tabulated in Table 4, which were measured by the method described above. In addition, the OER curves of the iron-nickel foams formed from the iron precursor solutions of different concentrations are shown in Fig. 3, the horizontal axis in Fig. 3 is the voltage (V) relative to the reversible hydrogen electrode (RHE), and the vertical axis in Fig. 3 is the current density (J, mA/cm²). As shown in Table 4, the nickel foam wrapped by a small amount of iron had effects of improving HER and OER.

**Table 4**

| [FeCl₃] | 0.08 mM | 0.4 mM | 2 mM | 10 mM | 50 mM | 250 mM |
|---|---|---|---|---|---|---|
| Fe/Fe + Nickel foam (wt%) | 0.04 | Not detectable | 0.09 | 0.09 | 0.22 | 0.26 |
| HER activity (mV at 10 mA/cm²) | Not available | Not available | Not available | Not available | Not available | 160 |
| OER activity (mV at 100 mA/cm²) | 382 | 326 | 299 | 288 | 281 | 272 |

### Example 4

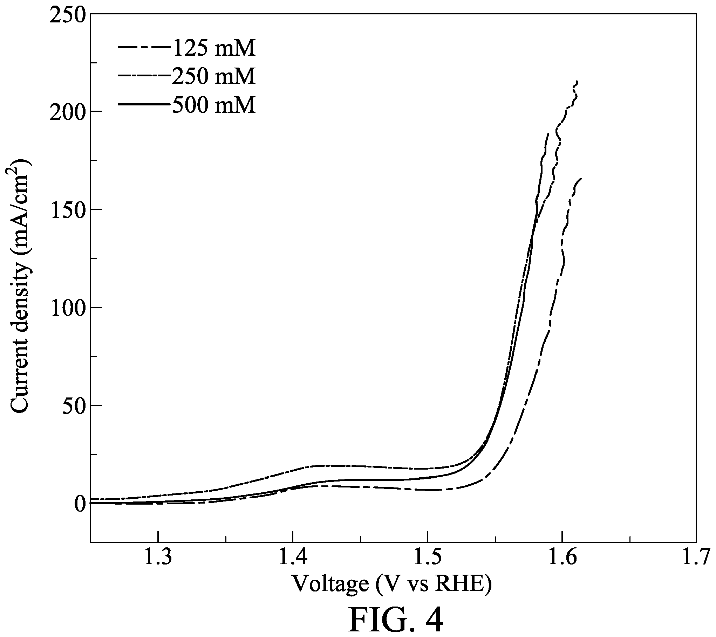

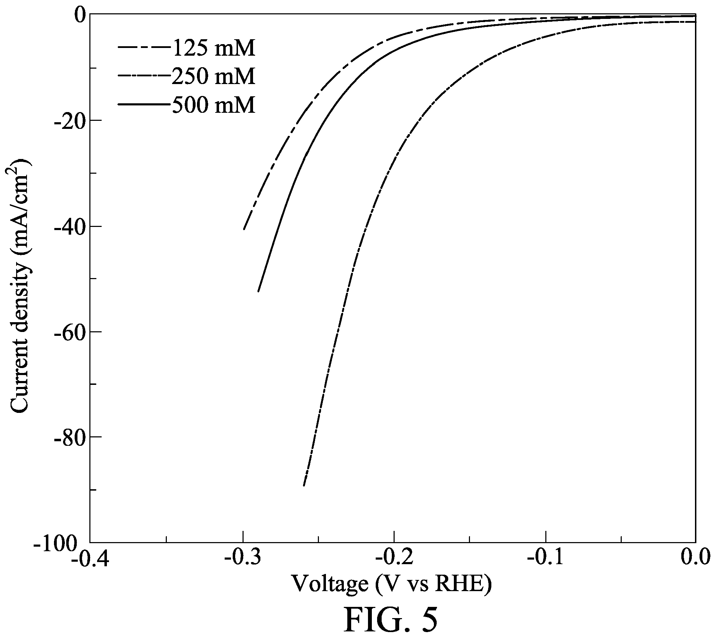

The pre-treated nickel foams were dipped in cobalt precursor solutions of different concentrations, respectively, and stirred for 3 hours. The nickel foam surface was then washed with de-ionized water until the seepage liquid being transparent. The extra water was removed from the nickel foams by wipe paper, and the nickel foams were dried in a hot air circulation oven at 90°C, thereby obtaining cobalt-nickel foam samples. The cobalt-nickel foam samples formed from the cobalt precursor solutions of different concentrations were measured by energy dispersive X-ray to perform an elemental analysis. HER activities and OER activities of the different cobalt-nickel foam samples were measured as tabulated in Table 5, which were measured by the method described above. In addition, the OER curves of the cobalt-nickel foams formed from the cobalt precursor solutions of different concentrations are shown in Fig. 4, the horizontal axis in Fig. 4 is the voltage (V) relative to the reversible hydrogen electrode (RHE), and the vertical axis in Fig. 4 is the current density (J, mA/cm²). The HER curves of the cobalt-nickel foams formed from the cobalt precursor solutions of different concentrations are shown in Fig. 5, the horizontal axis in Fig. 5 is the voltage (V) relative to the reversible hydrogen electrode (RHE), and the vertical axis in Fig. 5 is the current density (J, mA/cm²). As shown in Table 5, the nickel foam wrapped by a small amount of cobalt had effects of improving HER and OER.

**Table 5**

| | HER | | | OER | | |
|---|---|---|---|---|---|---|
| [CoCl₂] | 125 mM | 250 mM | 500 mM | 125mM | 250mM | 500mM |
| Co/Co + nickel foam (wt %) | 1.74 | 5.26 | 4.94 | 1.74 | 5.23 | 4.94 |
| Co/Co + nickel foam (wt %) | 0.76 | 6.07 | 4.13 | 0.75 | 6.04 | 4.09 |
| Co/Co + nickel foam (wt %) | 0.74 | 4.76 | 3.47 | 0.73 | 4.74 | 3.45 |
| Average of Co/Co + nickel foam (wt %) | 1.08 | 5.36 | 4.18 | 1.07 | 5.34 | 4.16 |
| Overpotential at 10 mA/cm² (mV) | 233 | 147 | 216 | 305 | 131 | 181 |
| Overpotential at 100 mA/cm² (mV) | Not available | Not available | Not available | 363 | 337 | 340 |

### Example 5

Commercially available PtC was coated on a carbon paper and a nickel foam (pores size was 91 micrometers) to serve as a cathode of HER. Commercially available insoluble anode (IrO₂/RuO₂-Ti mesh, DSA electrode) and a nickel foam (pores size was 91 micrometers) served as the anode of OER, and an anion exchange film X37-50 (commercially available from Dioxide Materials) was interposed between the PtC of the cathode and the DSA electrode of the anode to obtain a membrane electrode assembly (MEA). MEA was interposed between two stainless current collectors, and then dipped in 2 M KOH solution to test its electrochemical activity. The scan voltage ranged from 1.2 V to 2.2 V and the scan rate was 50 mV/s. The membrane electrode assembly could generate a current of 5.18 A at 2 V. The potential of MEA was controlled at 2 V and continuously operated for 1000 minutes, and the current decay of MEA was about 4.6%.

The above experiment was repeated but the pore size of the nickel foam was changed to 151 micrometers. The other components of MEA and the method of testing the electrochemical activity were similar to those described above. The membrane electrode assembly could generate a current of 5.42 A at 2 V. The potential of MEA was controlled at 2 V and continuously operated for 1000 minutes, and the current decay of MEA was about 26.2%.

The above experiment was repeated but the pore size of the nickel foam was changed to 219 micrometers. The other components of MEA and the method of testing the electrochemical activity were similar to those described above. The membrane electrode assembly could generate a current of 5.63 A at 2 V. The potential of MEA was controlled at 2 V and continuously operated for 1000 minutes, and the current decay of MEA was about 22.4%. As known from the experiments, if the pore size of the nickel foam was too large, the decay extent of MEA after being a long-term operation would be high.

### Example 6-1

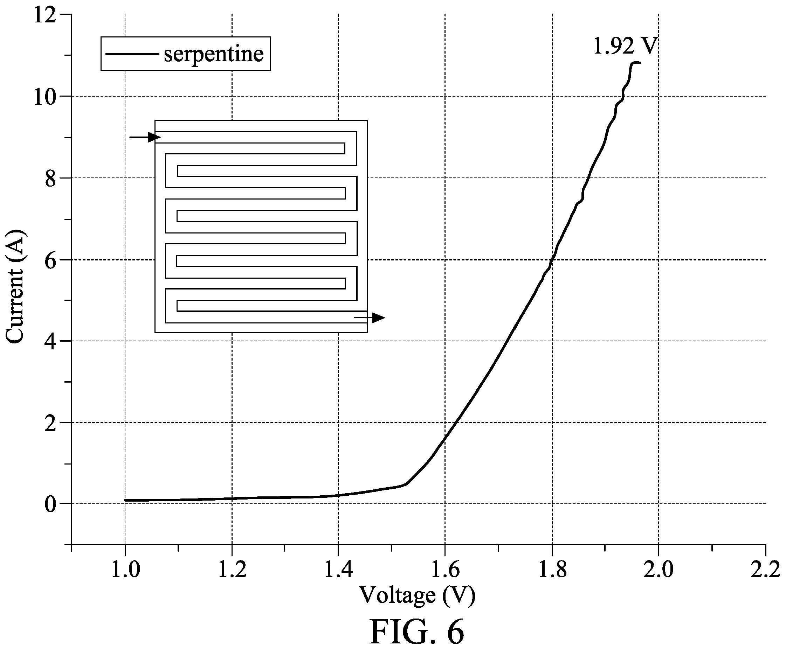

Ni_{0.065}Ru_{1.935} catalyst was prepared on the conductive carbon paper as Preparation Examples 2 and 12 in Taiwan Patent No. I677596 to serve as a cathode of HER, Ni_{1.5}Nb_{0.5}N₂-stainless steel mesh of Preparation Example 9 in Taiwan Patent No. I677596 was selected to serve as an anode of OER, and a commercially available anionic exchange membrane X37-50 (Dioxide Materials) was interposed between the cathode and the anode to form MEA. MEA was interposed between two stainless steel current collectors, a serpentine flow channel layer was interposed between the Ni_{0.065}Ru_{1.935}-conductive carbon paper and one current collector, and another serpentine flow channel layer was interposed between the Ni_{1.5}Nb_{0.5}N₂-stainless steel mesh and another current collector. MEA was dipped in 2 M KOH solution to test its LSV electrochemical activity as below. The scan voltage ranged from 1.0 V to 2.0 V and the scan rate was 50 mV/s. The current versus voltage curve of MEA is shown in Fig. 6.

### Example 6-2

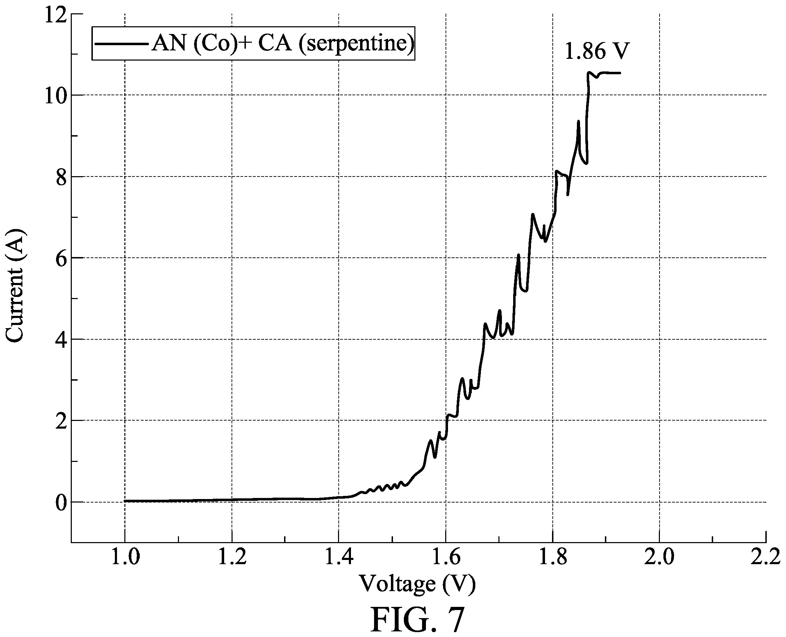

Example 6-2 was similar to Example 6-1, and the differences in Example 6-2 were Ni_{1.5}Nb_{0.5}N₂-stainless steel mesh and Co-nickel foam (e.g. Example 1) serving as the anode of OER, and the serpentine flow channel layer interposed between the Ni_{1.5}Nb_{0.5}N₂-stainles steel mesh and the current collector was omitted. The other components of MEA and the method of testing the electrochemical activity were similar to those described above. The current versus voltage curve of MEA is shown in Fig. 7.

### Example 6-3

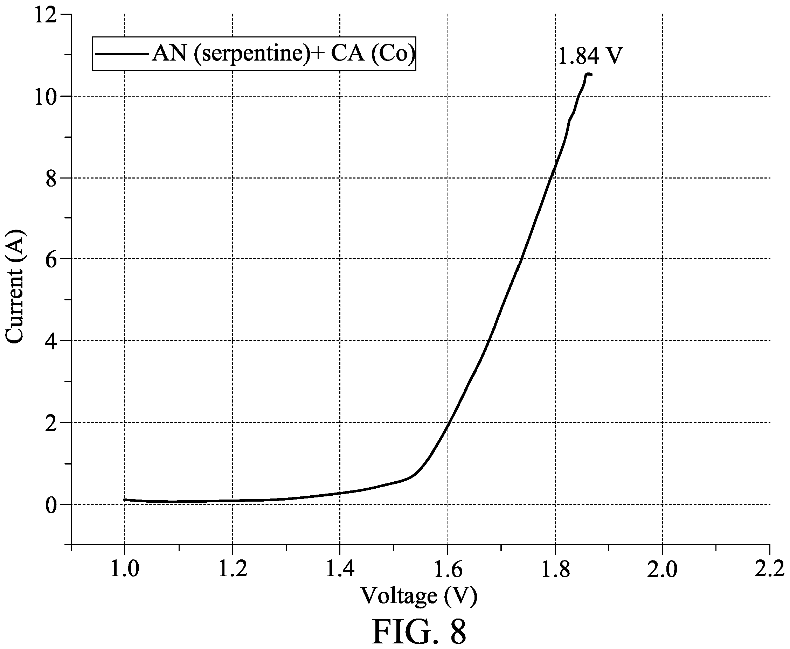

Example 6-3 was similar to Example 6-1, and the differences in Example 6-3 were Ni_{0.75}Ru_{1.25}N₂-stainless steel mesh and Co-nickel foam (e.g. Example 1) serving as the cathode of HER, and the serpentine flow channel layer interposed between the Ni_{0.75}Ru_{1.25}N₂-stainless steel mesh and the current collector was omitted. The other components of MEA and the method of testing the electrochemical activity were similar to those described above. The current versus voltage curve of MEA is shown in Fig. 8.

### Example 6-4

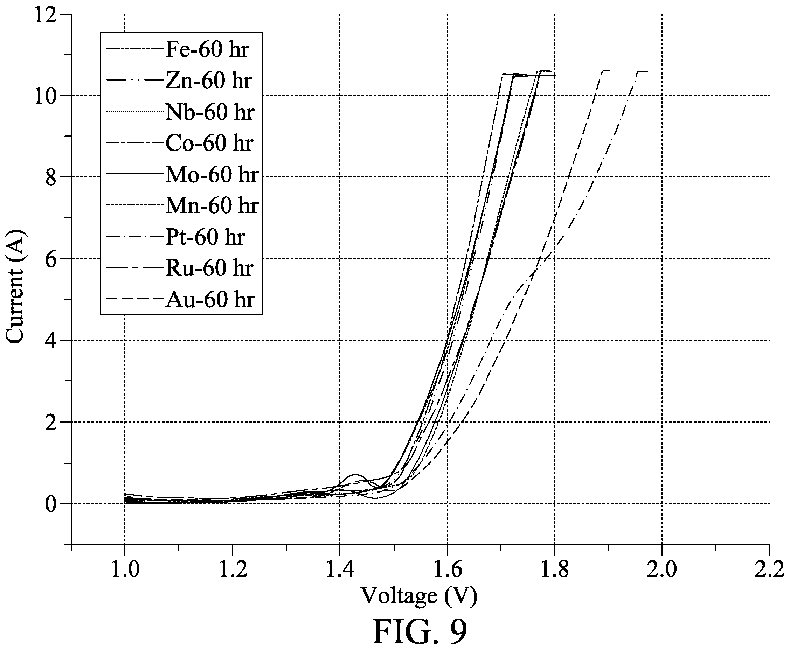

Example 6-4 was similar to Example 6-1, and the differences in Example 6-4 were Ni_{0.065}Ru_{1.935}-conductive carbon paper and different metal-nickel foams (e.g. Example 1) serving as the anodes of HER, Ni_{1.5}Nb_{0.5}N₂-stainless steel mesh and different metal-nickel foams (e.g. Example 1) serving as the anodes of OER, the serpentine flow channel layer interposed between the Ni_{0.065}Ru_{1.935}-conductive carbon paper and the current collector was omitted, and the serpentine flow channel layer interposed between the Ni_{1.5}Nb_{0.5}N₂-stainless steel mesh and the current collector was omitted. The other components of MEA and the method of testing the electrochemical activity were similar to those described above. The current versus voltage curves of MEAs after being operated for 60 hours are shown in Fig. 9. Although the metal-nickel foams in the anode and the cathode were the same in this Example, it should be understood that the metal-nickel foams in the anode and the cathode could be different (e.g. different pore sizes of the nickel foam, different amounts of the metal for wrapping the nickel foam, different types of the metal, or a combination thereof).

### Example 7

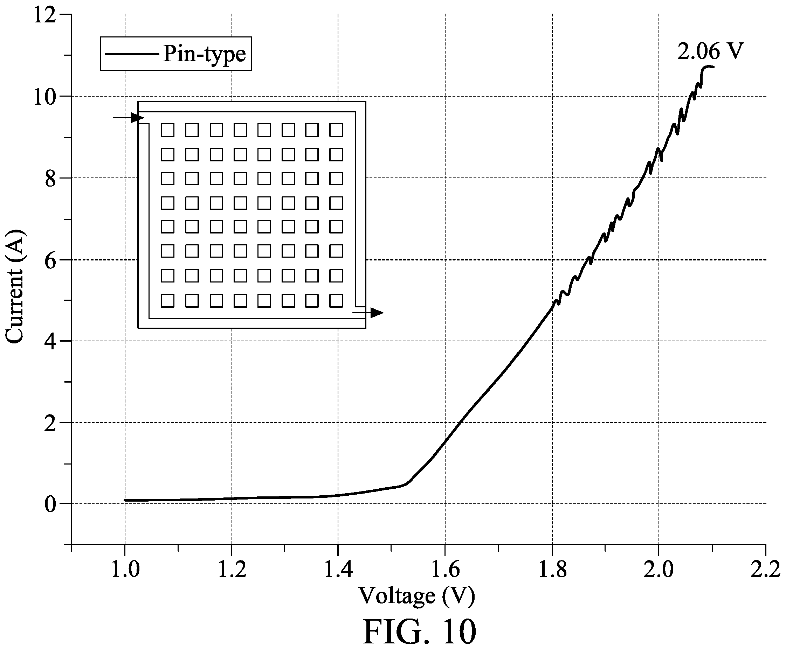

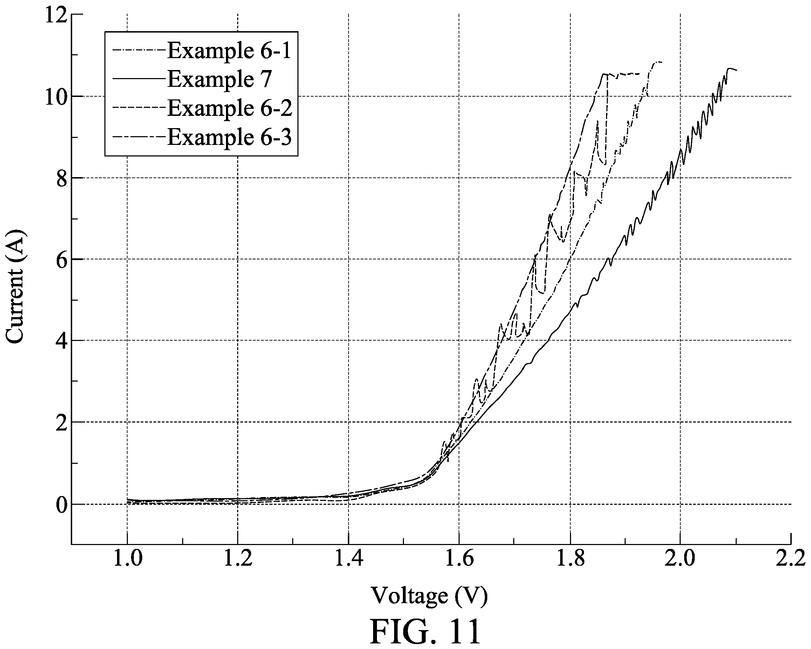

Ni_{0.065}Ru_{1.935}-conductive carbon paper of Preparation Examples 11 and 12 in Taiwan Patent No. I677596 was selected to serve as a cathode of HER, Ni_{1.5}Nb_{0.5}N₂-stainless steel mesh of Preparation Example 9 in Taiwan Patent No. I677596 was selected to serve as an anode of OER, and a commercially available anion exchange membrane X37-50 (Dioxide Materials) was interposed between the cathode and the anode to form MEA. MEA was interposed between two stainless steel current collectors, a pin-type flow channel layer was interposed between the Ni_{0.065}Ru_{1.935}-conductive carbon paper and one current collector, and another pin-type flow channel layer was interposed between the Ni_{1.5}Nb_{0.5}N₂-stainles steel mesh and another current collector. MEA was dipped in 2 M KOH solution to test its LSV electrochemical activity as below. The scan voltage ranged from 1.0 V to 2.0 V and the scan rate was 50 mV/s. The current versus voltage curve of MEA is shown in Fig. 10. The comparison between the current versus voltage curves of Example 6-1, Example 6-2, Example 6-3, and Example 7 is shown in Fig. 11. As shown in the comparison, only one electrode (e.g. anode or cathode) adopting the metal-nickel foam could improve the hydrogen evolution efficiency of MEA and omit the flow channel layer on one side of MEA. If both the anode and the cathode adopted metal-nickel foam, the hydrogen evolution efficiency of MEA could be further improved, and the flow channel layers on both sides of MEA could be omitted.

## Claims

1. An electrolysis device (200) for hydrogen evolution, comprising:
a membrane electrode assembly (20), comprising:
a first electrode (11 or 15);
a second electrode (15 or 11); and
an anion exchange membrane (13) disposed between the first electrode and the second electrode,
wherein the first electrode (11 or 15) comprises
a first metal mesh (11A or 15A);
a first catalyst layer wrapping the first metal mesh;
a second metal mesh (11B or 15B); and
a second catalyst layer wrapping the second metal mesh,
wherein the first metal mesh (11A or 15A) is disposed between the anion exchange membrane (13) and the second metal mesh (11B or 15B),
wherein the second metal mesh (11B or 15B) is thicker than the first metal mesh (11A or 15A), the first catalyst layer is thicker than the second catalyst layer, the second catalyst layer is iron, cobalt, manganese, zinc, niobium, molybdenum, ruthenium, platinum, gold, or aluminum, and the second catalyst layer is crystalline,
a first current collector (19); and
a second current collector (19),
wherein the membrane electrode assembly (20) is interposed between the first current collector (19) and the second current collector (19), wherein the first electrode (11 or 15) is disposed between the anion exchange membrane (13) and the first current collector (19), the second electrode (15 or 11) is disposed between the anion exchange membrane (13) and the second current collector (19), and the first electrode (11 or 15) and the first current collector (19) have no flow channel layer therebetween.

2. The electrolysis device (200) for hydrogen evolution as claimed in the previous claim, wherein the first electrode (11 or 15) is an anode (11), the second electrode (15 or 11) is a cathode (15), and the second catalyst layer is iron, cobalt, zinc, niobium, molybdenum, ruthenium, platinum, or gold.

3. The electrolysis device (200) for hydrogen evolution as claimed in the previous claim, wherein the first catalyst layer has a chemical structure of M'ₐM"_{b}N₂, M'_{c}M"_{d}Cₑ, or MₓRu_{y}N₂, wherein M' is Ni, Co, Fe, Mn, Cr, V, Ti, Cu, or Zn, M" is Nb, Ta, or a combination thereof, M is Ni, Co, Fe, Mn, Cr, V, Ti, Cu, or Zn, 0.7≤a≤1.7, 0.3≤b≤1.3, a+b=2, 0.24≤c≤1.7, 0.3≤d≤1.76, 0.38≤e≤3.61, 0<x<1.3, 0.7<y<2, and x+y=2,
wherein M'ₐM"_{b}N₂ is a cubic crystal system, M'_{c}M"_{d}Cₑ is a cubic crystal system or amorphous, and MₓRu_{y}N₂ is a cubic crystal system or amorphous.

4. The electrolysis device (200) for hydrogen evolution as claimed in any of the previous claims, wherein the first electrode (11 or 15) is a cathode (15), the second electrode (15 or 11) is anode (11), and the second catalyst layer is iron, cobalt, manganese, zinc, niobium, molybdenum, gold, or aluminum.

5. The electrolysis device (200) for hydrogen evolution as claimed in the previous claim, wherein the first catalyst layer has a chemical structure of MₓRu_{y}N₂ or MₓRu_{y}, M is Ni, Co, Fe, Mn, Cr, V, Ti, Cu, or Zn, 0<x<1.3, 0.7<y<2, x+y=2, MₓRu_{y}N₂ is a cubic crystal system or amorphous, and MₓRu_{y} is a cubic crystal system.

6. The electrolysis device (200) for hydrogen evolution as claimed in any of the previous claims, wherein the first catalyst layer has a thickness of 0.25 micrometers to 1 micrometers, and the second catalyst layer has a thickness of 0.01 micrometers to 0.25 micrometers.

7. The electrolysis device (200) for hydrogen evolution as claimed in any of the previous claims, wherein the second metal mesh (11B or 15B) has a pore size of 60 micrometers to 120 micrometers.

8. The electrolysis device (200) for hydrogen evolution as claimed in any of the previous claims, wherein the second metal mesh (11B or 15B) and the second catalyst layer have a weight ratio of 99:10 to 99.9:0.1.

9. The electrolysis device (200) for hydrogen evolution as claimed in any of the previous claims, wherein the second electrode (15 or 11) comprises:
a third metal mesh (15A or 11A);
a third catalyst layer wrapping the third metal mesh (15A or 11A);
a fourth metal mesh (15B or 11B); and
a fourth catalyst layer wrapping the fourth metal mesh (15B or 11B),
wherein the third metal mesh (15A or 11A) is disposed between the anion exchange membrane (13) and the fourth metal mesh (15B or 11B),
wherein the fourth metal mesh (15B or 11B) is thicker than the third metal mesh (15A or 11A), the third catalyst layer is thicker than the fourth catalyst layer, the fourth catalyst layer is iron, cobalt, manganese, zinc, niobium, molybdenum, ruthenium, platinum, gold, or aluminum, and the fourth catalyst layer is crystalline.

10. The electrolysis device (200) for hydrogen evolution as claimed in the previous claim, wherein the second electrode (15 or 11) and the second current collector (19) have no flow channel layer therebetween.

11. A method for hydrogen evolution by electrolysis, comprising:
dipping an electrolysis device (200) for hydrogen evolution in an alkaline aqueous solution, wherein the electrolysis device (200) for hydrogen evolution comprises:
a membrane electrode assembly (20), comprising:
a first electrode (11 or 15);
a second electrode (15 or 11); and
an anion exchange membrane (13) disposed between the first electrode (11 or 15) and the second electrode (15 or 11),
wherein the first electrode (11 or 15) comprises
a first metal mesh (11A or 15A);
a first catalyst layer wrapping the first metal mesh (11A or 15A);
a second metal mesh (11B or 15B); and
a second catalyst layer wrapping the second metal mesh (11B or 15B),
wherein the first metal mesh (11A or 15A) is disposed between the anion exchange membrane (13) and the second metal mesh (11B or 15B),
wherein the second metal mesh (11B or 15B) is thicker than the first metal mesh (11A or 15A), the first catalyst layer is thicker than the second catalyst layer, the second catalyst layer is iron, cobalt, manganese, zinc, niobium, molybdenum, ruthenium, platinum, gold, or aluminum, and the second catalyst layer is crystalline,
a first current collector (19); and
a second current collector (19),wherein the membrane electrode assembly (20) is interposed between the first current collector (19) and the second current collector (19), wherein the first electrode (11 or 15) is disposed between the anion exchange membrane (13) and the first current collector (19), the second electrode (15 or 11) is disposed between the anion exchange membrane (13) and the second current collector (19), and the first electrode (11 or 15) and the first current collector (19) have no flow channel layer therebetween; and
applying a potential to the first electrode (11 or 15) and the second electrode (15 or 11) to electrolyze the alkaline aqueous solution for generating hydrogen with the first electrode (11 or 15) or the second electrode (15 or 11) and generating oxygen with the other of the first electrode (11 or 15) or the second electrode (15 or 11).

12. The method for hydrogen evolution by electrolysis as claimed in the previous claim, wherein the alkaline aqueous solution has a pH value that is greater than or equal to 13.

13. The method for hydrogen evolution by electrolysis as claimed in the previous claim, wherein the second electrode (15 or 11) comprises:
a third metal mesh (15A or 11A);
a third catalyst layer wrapping the third metal mesh (15A or 11A);
a fourth metal mesh (15B or 11B); and
a fourth catalyst layer wrapping the fourth metal mesh (15B or 11B),
wherein the third metal mesh (15A or 11A) is disposed between the anion exchange membrane (13) and the fourth metal mesh (15B or 11B),
wherein the fourth metal mesh (15B or 11B) is thicker than the third metal mesh (15A or 11A), the third catalyst layer is thicker than the fourth catalyst layer, the fourth catalyst layer is iron, cobalt, manganese, zinc, niobium, molybdenum, ruthenium, platinum, gold, or aluminum, and the fourth catalyst layer is crystalline.

14. The method for hydrogen evolution by electrolysis as claimed in the previous claim, wherein the second current collector (19) and the second electrode (15 or 11) have no flow channel layer therebetween.

## Patentansprüche

1. Elektrolysevorrichtung (200) zur Wasserstoffentwicklung, umfassend:
eine Membranelektrodenanordnung (20), die umfasst:
eine erste Elektrode (11 oder 15);
eine zweite Elektrode (15 oder 11); und
eine Anionenaustauschmembran (13), angeordnet zwischen der ersten Elektrode und der zweiten Elektrode,
wobei die erste Elektrode (11 oder 15) umfasst:
ein erstes Metallnetz (11A oder 15A);
eine erste Katalysatorschicht, die das erste Metallnetz umhüllt;
ein zweites Metallnetz (11B oder 15B); und
eine zweite Katalysatorschicht, die das zweite Metallnetz umhüllt,
wobei das erste Metallnetz (11A oder 15A) zwischen der Anionenaustauschmembran (13) und dem zweiten Metallnetz (11B oder 15B) angeordnet ist,
wobei das zweite Metallnetz (11B oder 15B) dicker als das erste Metallnetz (11A oder 15A) ist, die erste Katalysatorschicht dicker als die zweite Katalysatorschicht ist, die zweite Katalysatorschicht Eisen, Kobalt, Mangan, Zink, Niob, Molybdän, Ruthenium, Platin, Gold oder Aluminium ist, und die zweite Katalysatorschicht ein kristallines Gefüge ist,
einen ersten Stromkollektor (19); und
einen zweiten Stromkollektor (19),
wobei die Membranelektrodenanordnung (20) sich zwischen dem ersten Stromkollektor (19) und dem zweiten Stromkollektor (19) befindet, wobei die erste Elektrode (11 oder 15) zwischen der Anionenaustauschmembran (13) und dem ersten Stromkollektor (19) angeordnet ist, die zweite Elektrode (15 oder 11) zwischen der Anionenaustauschmembran (13) und dem zweiten Stromkollektor (19) angeordnet ist, und sich zwischen der ersten Elektrode (11 oder 15) und dem ersten Stromkollektor (19) kein Schichtenströmungskanal befindet.

2. Elektrolysevorrichtung (200) zur Wasserstoffentwicklung nach vorstehendem Anspruch, wobei die erste Elektrode (11 oder 15) eine Anode (11) ist, die zweite Elektrode (15 oder 11) eine Kathode (15) ist, und die zweite Katalysatorschicht Eisen, Kobalt, Zink, Niob, Molybdän, Ruthenium, Platin oder Gold ist.

3. Elektrolysevorrichtung (200) zur Wasserstoffentwicklung nach vorstehendem Anspruch, wobei die erste Katalysatorschicht eine chemische Struktur aus M'ₐM"_{b}N₂, M'_{c}M"_{d}Cₑ, oder MₓRu_{y}N₂ hat, wobei M' Ni, Co, Fe, Mn, Cr, V, Ti, Cu oder Zn ist, M" Nb, Ta, oder eine Kombination daraus, ist, M Ni, Co, Fe, Mn, Cr, V, Ti, Cu oder Zn, 0,7≤a≤1,7, 0,3≤b≤1,3, a+b=2, 0,24≤c≤1,7, 0,3≤d≤1,76, 0,38≤e≤3,61, 0≤x<l,3, 0,7<y<2, und x+y=2 ist,
wobei M'ₐM"_{b}N₂ ein kubisches Kristallsystem ist, M'_{c}M"_{d}Cₑ ein kubisches Kristallsystem oder amorph ist, und MₓRu_{y}N₂ ein kubisches Kristallsystem oder amorph ist.

4. Elektrolysevorrichtung (200) zur Wasserstoffentwicklung nach einem der vorstehenden Ansprüche, wobei die erste Elektrode (11 oder 15) eine Kathode (15) ist, die zweite Elektrode (15 oder 11) eine Anode (11) ist und die zweite Katalysatorschicht Eisen, Kobalt, Mangan, Zink, Niob, Molybdän, Gold oder Aluminium ist.

5. Elektrolysevorrichtung (200) zur Wasserstoffentwicklung nach dem vorstehenden Anspruch, wobei die erste Katalysatorschicht eine chemische Struktur aus MₓRu_{y}N₂ oder MₓRu_{y} hat, M Ni, Co, Fe, Mn, Cr, V, Ti, Cu oder Zn, 0<x<l,3, 0,7<y<2, x+y=2 ist, MₓRu_{y}N₂ ein kubisches Kristallsystem oder amorph ist, und MₓRu_{y} ein kubisches Kristallsystem ist.

6. Elektrolysevorrichtung (200) zur Wasserstoffentwicklung nach einem der vorstehenden Ansprüche, wobei die erste Katalysatorschicht eine Dicke von 0,25 Mikrometern bis 1 Mikrometer hat, und die zweite Katalysatorschicht eine Dicke von 0,01 Mikrometern bis 0,25 Mikrometer hat.

7. Elektrolysevorrichtung (200) zur Wasserstoffentwicklung nach einem der vorstehenden Ansprüche, wobei das zweite Metallnetz (11B oder 15B) eine Porengröße von 60 Mikrometern bis 120 Mikrometern hat.

8. Elektrolysevorrichtung (200) zur Wasserstoffentwicklung nach einem der vorstehenden Ansprüche, wobei das zweite Metallnetz (11B oder 15B) und die zweite Katalysatorschicht ein Gewichtsverhältnis von 99:10 bis 99.9:0,1 haben.

9. Elektrolysevorrichtung (200) zur Wasserstoffentwicklung nach einem der vorstehenden Ansprüche, wobei die zweite Elektrode (15 oder 11) umfasst:
ein drittes Metallnetz (15A oder 11A);
eine dritte Katalysatorschicht, die das dritte Metallnetz umhüllt (15A oder l11A);
ein viertes Metallnetz (15B oder 11B); und
eine vierte Katalysatorschicht, die das vierte Metallnetz umhüllt (15B oder 11B),
wobei das dritte Metallnetz (15A oder 11A) zwischen der Anionenaustauschmembran (13) und dem vierten Metallnetz (15B oder 11B) angeordnet ist,
wobei das vierte Metallnetz (15B oder 11B) dicker als das dritte Metallnetz (15A oder 11A) ist, wobei die dritte Katalysatorschicht dicker als die vierte Katalysatorschicht ist, wobei die vierte Katalysatorschicht Eisen, Kobalt, Mangan, Zink, Niob, Molybdän, Ruthenium, Platin, Gold oder Aluminium ist und die vierte Katalysatorschicht ein kristallines Gefüge ist.

10. Elektrolysevorrichtung (200) zur Wasserstoffentwicklung nach dem vorstehenden Anspruch, wobei sich zwischen der zweiten Elektrode (15 oder 11) und dem zweiten Stromkollektor (19) kein Schichtenströmungskanal befindet.

11. Verfahren zur Wasserstoffentwicklung durch Elektrolyse, umfassend:
Eintauchen einer Elektrolysevorrichtung (200) zur Wasserstoffentwicklung in eine alkalisch-wässrige Lösung, wobei die Elektrolysevorrichtung (200) zur Wasserstoffentwicklung umfasst:
eine Membranelektrodenanordnung (20), umfassend:
eine erste Elektrode (11 oder 15);
eine zweite Elektrode (15 oder 11); und
eine Anionenaustauschmembran (13), die zwischen der ersten Elektrode (11 oder 15) und der zweiten Elektrode (15 oder 11) angeordnet ist,
wobei die erste Elektrode (11 oder 15) umfasst:
ein erstes Metallnetz (11A oder 15A);
eine erste Katalysatorschicht, die das erste Metallnetz umhüllt (11A oder 15A);
ein zweites Metallnetz (11B oder 15B); und
eine zweite Katalysatorschicht, die das zweite Metallnetz umhüllt (11B oder 15B),
wobei das erste Metallnetz (11A or 15A) zwischen der Anionenaustauschmembran (13) und dem zweiten Metallnetz (11B oder 15B) angeordnet ist,
wobei das zweite Metallnetz (11B or 15B) dicker als das erste Metallnetz (11A oder 15A) ist, die erste Katalysatorschicht dicker als die zweite Katalysatorschicht ist, die zweite Katalysatorschicht Eisen, Kobalt, Mangan, Zink, Niob, Molybdän, Ruthenium, Platin, Gold oder Aluminium ist, und die zweite Katalysatorschicht ein kristallines Gefüge ist,
einen ersten Stromkollektor (19); und
einen zweiten Stromkollektor (19), wobei die Membranelektrodenanordnung (20) sich zwischen dem ersten Stromkollektor (19) und dem zweiten Stromkollektor (19) befindet, wobei die erste Elektrode (11 oder 15) zwischen der Anionenaustauschmembran (13) und dem ersten Stromkollektor (19) angeordnet ist, die zweite Elektrode (15 oder 11) zwischen der Anionenaustauschmembran (13) und dem zweiten Stromkollektor (19) angeordnet ist, und sich zwischen der ersten Elektrode (11 oder 15) und dem ersten Stromkollektor (19) kein Schichtenströmungskanal befindet, und
Anlegen eines Potentials an die erste Elektrode (11 oder 15) und die zweite Elektrode (15 oder 11), um die alkalisch-wässrige Lösung zu elektrolysieren, um mit der ersten Elektrode (11 oder 15) oder der zweiten Elektrode (15 oder 11) Wasserstoff zu erzeugen und mit der anderen von der ersten Elektrode (11 oder 15) oder der zweiten Elektrode (15 oder 11) Sauerstoff zu erzeugen.

12. Verfahren zur Wasserstoffentwicklung durch Elektrolyse nach dem vorstehenden Anspruch, wobei die alkalisch-wässrige Lösung einen pH-Wert von größer oder gleich 13 hat.

13. Verfahren zur Wasserstoffentwicklung durch Elektrolyse nach dem vorstehenden Anspruch, wobei die zweite Elektrode (15 oder 11) umfasst:
ein drittes Metallnetz (15A oder 11A);
eine dritte Katalysatorschicht, die das dritte Metallnetz umhüllt (15A oder 11A);
ein viertes Metallnetz (15B oder 11B); und
eine vierte Katalysatorschicht, die das vierte Metallnetz umhüllt (15B oder 11B),
wobei das dritte Metallnetz (15A oder 11A) zwischen der Anionenaustauschmembran (13) und dem vierten Metallnetz (15B oder 11B) angeordnet ist,
wobei das vierte Metallnetz (15B oder 11B) dicker als das dritte Metallnetz (15A oder 11A) ist, die dritte Katalysatorschicht dicker als die vierte Katalysatorschicht ist, die vierte Katalysatorschicht Eisen, Kobalt, Mangan, Zink, Niob, Molybdän, Ruthenium, Platin, Gold oder Aluminium ist, und die vierte Katalysatorschicht ein kristallines Gefüge ist.

14. Verfahren zur Wasserstoffentwicklung durch Elektrolyse nach dem vorstehenden Anspruch, wobei sich zwischen dem zweiten Stromkollektor (19) und der zweiten Elektrode (15 oder 11) kein Schichtenströmungskanal befindet.

## Revendications

1. Dispositif d'électrolyse (200) destiné à un dégagement d'hydrogène, comprenant :
un ensemble électrodes à membrane (20), comprenant :
une première électrode (11 ou 15) ;
une seconde électrode (15 ou 11) ; et
une membrane d'échange anionique (13) disposée entre la première électrode et la seconde électrode,
dans lequel la première électrode (11 ou 15) comprend
un premier maillage métallique (11A ou 15A) ;
une première couche de catalyseur entourant le premier maillage métallique ;
un deuxième maillage métallique (11B ou 15B) ; et
une deuxième couche de catalyseur entourant le deuxième maillage métallique,
dans lequel le premier maillage métallique (11A ou 15A) est disposé entre la membrane d'échange anionique (13) et le deuxième maillage métallique (11B ou 15B),
dans lequel le deuxième maillage métallique (11B ou 15B) est plus épais que le premier maillage métallique (11A ou 15A), la première couche de catalyseur est plus épaisse que la deuxième couche de catalyseur, la deuxième couche de catalyseur est du fer, du cobalt, du manganèse, du zinc, du niobium, du molybdène, du ruthénium, du platine, de l'or ou de l'aluminium, et la deuxième couche de catalyseur est cristalline,
un premier collecteur de courant (19) ; et
un second collecteur de courant (19),
dans lequel l'ensemble électrodes à membrane (20) est interposé entre le premier collecteur de courant (19) et le second collecteur de courant (19), dans lequel la première électrode (11 ou 15) est disposée entre la membrane d'échange anionique (13) et le premier collecteur de courant (19), la seconde électrode (15 ou 11) est disposée entre la membrane d'échange anionique (13) et le second collecteur de courant (19), et la première électrode (11 ou 15) et le premier collecteur de courant (19) n'ont pas de couche de canal d'écoulement entre eux.

2. Dispositif d'électrolyse (200) destiné à un dégagement d'hydrogène selon la revendication précédente, dans lequel la première électrode (11 ou 15) est une anode (11), la seconde électrode (15 ou 11) est une cathode (15), et la seconde couche de catalyseur est le fer, le cobalt, le zinc, le niobium, le molybdène, le ruthénium, le platine ou l'or.

3. Dispositif d'électrolyse (200) destiné à un dégagement d'hydrogène selon la revendication précédente, dans lequel la première couche de catalyseur a une structure chimique de M'ₐM"_{b}N₂, M'_{c}M"_{d}Cₑ ou MₓRu_{y}N₂, dans lequel M' représente Ni, Co, Fe, Mn, Cr, V, Ti, Cu ou Zn, M" représente Nb, Ta ou une combinaison de ceux-ci, M représente Ni, Co, Fe, Mn, Cr, V, Ti, Cu ou Zn, 0,7 ≤ a ≤ 1,7, 0,3 ≤ b ≤ 1,3, a + b = 2, 0,24 ≤ c ≤ 1,7, 0,3 ≤ d ≤ 1,76, 0,38 ≤ e ≤ 3,61, 0 < x < 1,3, 0,7 < y < 2, et x + y = 2,
dans lequel M'ₐM"_{b}N₂ est un système cristallin cubique, M'_{c}M"_{d}Cₑ est un système cristallin cubique ou est amorphe, et MₓRu_{y}N₂ est un système cristallin cubique ou est amorphe.

4. Dispositif d'électrolyse (200) destiné à un dégagement d'hydrogène selon l'une quelconque des revendications précédentes, dans lequel la première électrode (11 ou 15) est une cathode (15), la seconde électrode (15 ou 11) est une anode (11), et la deuxième couche de catalyseur est le fer, le cobalt, le manganèse, le zinc, le niobium, le molybdène, l'or ou l'aluminium.

5. Dispositif d'électrolyse (200) destiné à un dégagement d'hydrogène selon la revendication précédente, dans lequel la première couche de catalyseur a une structure chimique de MₓRu_{y}N₂ ou MₓRu_{y}, M représente Ni, Co, Fe, Mn, Cr, V, Ti, Cu ou Zn, 0 < x < 1,3, 0,7 < y < 2, x + y = 2, MₓRu_{y}N₂ est un système cristallin cubique ou est amorphe, et MₓRu_{y} est un système cristallin cubique.

6. Dispositif d'électrolyse (200) destiné à un dégagement d'hydrogène selon l'une quelconque des revendications précédentes, dans lequel la première couche de catalyseur a une épaisseur de 0,25 micromètre à 1 micromètre, et la deuxième couche de catalyseur a une épaisseur de 0,01 micromètre à 0,25 micromètre.

7. Dispositif d'électrolyse (200) destiné à un dégagement d'hydrogène selon l'une quelconque des revendications précédentes, dans lequel le deuxième maillage métallique (11B ou 15B) a une taille de pore de 60 micromètres à 120 micromètres.

8. Dispositif d'électrolyse (200) destiné à un dégagement d'hydrogène selon l'une quelconque des revendications précédentes, dans lequel le deuxième maillage métallique (11B ou 15B) et la deuxième couche de catalyseur ont un rapport massique de 99:10 à 99,9:0,1.

9. Dispositif d'électrolyse (200) destiné à un dégagement d'hydrogène selon l'une quelconque des revendications précédentes, dans lequel la seconde électrode (15 ou 11) comprend :
un troisième maillage métallique (15A ou 11A) ;
une troisième couche de catalyseur entourant le troisième maillage métallique (15A ou 11A) ;
un quatrième maillage métallique (15B ou 11B) ; et
une quatrième couche de catalyseur entourant le quatrième maillage métallique (15B ou 11B),
dans lequel le troisième maillage métallique (15A ou 11A) est disposé entre la membrane d'échange anionique (13) et le quatrième maillage métallique (15B ou 11B),
dans lequel le quatrième maillage métallique (15B ou 11B) est plus épais que le troisième maillage métallique (15A ou 11A), la troisième couche de catalyseur est plus épaisse que la quatrième couche de catalyseur, la quatrième couche de catalyseur est du fer, du cobalt, du manganèse, du zinc, du niobium, du molybdène, du ruthénium, du platine, de l'or ou de l'aluminium, et la quatrième couche de catalyseur est cristalline.

10. Dispositif d'électrolyse (200) destiné à un dégagement d'hydrogène selon la revendication précédente, dans lequel la seconde électrode (15 ou 11) et le second collecteur de courant (19) n'ont pas de couche de canal d'écoulement entre eux.

11. Procédé de dégagement d'hydrogène par électrolyse, comprenant :
l'immersion d'un dispositif d'électrolyse (200) destiné à un dégagement d'hydrogène dans une solution aqueuse basique, dans lequel le dispositif d'électrolyse (200) destiné à un dégagement d'hydrogène comprend :
un ensemble électrodes à membrane (20), comprenant :
une première électrode (11 ou 15) ;
une seconde électrode (15 ou 11) ; et
une membrane d'échange anionique (13) disposée entre la première électrode (11 ou 15) et la seconde électrode (15 ou 11),
dans lequel la première électrode (11 ou 15) comprend
un premier maillage métallique (11A ou 15A) ;
une première couche de catalyseur entourant le premier maillage métallique (11A ou 15A) ;
un deuxième maillage métallique (11B ou 15B) ; et
une deuxième couche de catalyseur entourant le deuxième maillage métallique (11B ou 15B),
dans lequel le premier maillage métallique (11A ou 15A) est disposé entre la membrane d'échange anionique (13) et le deuxième maillage métallique (11B ou 15B),
dans lequel le deuxième maillage métallique (11B ou 15B) est plus épais que le premier maillage métallique (11A ou 15A), la première couche de catalyseur est plus épaisse que la deuxième couche de catalyseur, la deuxième couche de catalyseur est du fer, du cobalt, du manganèse, du zinc, du niobium, du molybdène, du ruthénium, du platine, de l'or ou de l'aluminium, et la deuxième couche de catalyseur est cristalline,
un premier collecteur de courant (19) ; et
un second collecteur de courant (19), dans lequel l'ensemble électrodes à membrane (20) est interposé entre le premier collecteur de courant (19) et le second collecteur de courant (19), dans lequel la première électrode (11 ou 15) est disposée entre la membrane d'échange anionique (13) et le premier collecteur de courant (19), la seconde électrode (15 ou 11) est disposée entre la membrane d'échange anionique (13) et le second collecteur de courant (19), et la première électrode (11 ou 15) et le premier collecteur de courant (19) n'ont pas de couche de canal d'écoulement entre eux ; et
l'application d'un potentiel à la première électrode (11 ou 15) et à la seconde électrode (15 ou 11) pour électrolyser la solution aqueuse basique afin de générer de l'hydrogène avec la première électrode (11 ou 15) ou la seconde électrode (15 ou 11) et générer de l'oxygène avec l'autre parmi la première électrode (11 ou 15) ou la seconde électrode (15 ou 11).

12. Procédé de dégagement d'hydrogène par électrolyse selon la revendication précédente, dans lequel la solution aqueuse basique a une valeur de pH qui est supérieure ou égale à 13.

13. Procédé de dégagement d'hydrogène par électrolyse selon la revendication précédente, dans lequel la seconde électrode (15 ou 11) comprend :
un troisième maillage métallique (15A ou 11A) ;
une troisième couche de catalyseur entourant le troisième maillage métallique (15A ou 11A) ;
un quatrième maillage métallique (15B ou 11B) ; et
une quatrième couche de catalyseur entourant le quatrième maillage métallique (15B ou 11B),
dans lequel le troisième maillage métallique (15A ou 11A) est disposé entre la membrane d'échange anionique (13) et le quatrième maillage métallique (15B ou 11B),
dans lequel le quatrième maillage métallique (15B ou 11B) est plus épais que le troisième maillage métallique (15A ou 11A), la troisième couche de catalyseur est plus épaisse que la quatrième couche de catalyseur, la quatrième couche de catalyseur est du fer, du cobalt, du manganèse, du zinc, du niobium, du molybdène, du ruthénium, du platine, de l'or ou de l'aluminium, et la quatrième couche de catalyseur est cristalline.

14. Procédé de dégagement d'hydrogène par électrolyse selon la revendication précédente, dans lequel le second collecteur de courant (19) et la seconde électrode (15 ou 11) n'ont pas de couche de canal d'écoulement entre eux.
